# EUROPEAN PATENT SPECIFICATION

(11) **EP 3 189 978 B1**
(45) Date of publication and mention of the grant of the patent: **14.11.2018**
(21) Application number: 16203313.8
(22) Date of filing: 09.12.2016
(51) Int. Cl.: B60B 21/08

(54) **WHEEL RIM AND METHOD OF MANUFACTURING THE SAME**
RADFELGE UND VERFAHREN ZU DEREN HERSTELLUNG
JANTE ET SON PROCÉDÉ DE FABRICATION

(30) Priority: 10.12.2015 TW 104141550
(43) Date of publication of application: 12.07.2017
(73) Proprietor: Giant Manufacturing Co., Ltd., Taichung City 437 (TW)
(72) Inventor: Lin, Wei-Cheng, Taichung City (TW); Hsu, Che-Wei, New Taipei City (TW)
(74) Representative: Lang, Christian

(56) References cited:
- EP-A1- 2 322 357
- EP-A1- 2 524 817
- CN-U- 203 267 655
- US-A1- 2007 194 619

## Description

### BACKGROUND

### Technical Field

The present disclosure relates to a wheel rim and a method of manufacturing the wheel rim. More particularly, the present disclosure relates to a wheel rim being able to strengthen the wheel structure and lighten the weight and a method for manufacturing the wheel rim.

### Description of Related Art

Since carbon fiber composite materials have material characteristics of high strength and low specific density, in recent years, the carbon fiber composite materials have gradually become the materials adopted by many structural parts as well as the driving elements applied in related vehicles. For example, the wheel rims of bicycles are suitable for using the carbon fiber composite material, and this has become the main stream of the market of high-performance bicycles.

However, since the carbon fiber composite materials are mainly formed by combining fiber materials with macromolecule materials, the structure of the macromolecule materials will be damaged by the high temperature state resulted from the carbon fiber composite materials being rubbed by external forces, such that the overall structure strength is decreased. Accordingly, the structure of the elements using the macromolecule materials cannot bear the loading and impact thereof, and hence the situation of accidental destructions will occur.

Furthermore, the carbon fiber composite materials under the high temperature state are also less resistant to abrasion. When the carbon fiber composite materials used in the wheel rim have been rubbed by braking elements for a long time, the high temperature therebetween will make the wheel rim less resistant to abrasion, and hence the lifetime of the wheel rim will be decreased.

A bicycle fiber wheel rim existing in the current market tries to move the contacting location (braking side) of the braking elements of the bicycle downward to be close to the key part of the overall structure strength. This solution needs to be arranged with a special bicycle brake bosses, which is not conducive for consumers to fix or change in the future. In addition, the aforementioned design merely solves the problem of being lack of strength under high temperatures, but fails to solve the problem of being nonresistant to abrasion, while the weight of the wheel rim is increased as well.

Further, another bicycle fiber wheel rim existing in the current market attaches or uses a basalt fiber on the contacting location (braking side) of the braking elements of the carbon fiber wheel rim. This way merely avoids thermal conduction but fails to overcome the problem of being nonresistant to abrasion and the effects of the abrasion to the macromolecule materials.

### SUMMARY

According to the invention, a wheel rim is disposed between two corresponding braking elements. The wheel rim includes a rim body and a plurality of hollow anti-thermal units. The rim body adopts a carbon fiber composite material; and the plurality of hollow anti-thermal units are spread in two surfaces of the rim body corresponding to the two braking elements.

The wheel rim further includes two firm tracks opposite to each other and exposedly mounted on two sides of the rim body. The two firm tracks respectively correspond to the two braking elements, and the two surfaces of the rim body are surfaces of the two firm tracks. The hollow anti-thermal units are mixed and spread in the firm tracks, which not only allows the hollow anti-thermal units to integrate the abrasion-resistant features provided by the abrasion-resistant materials with effects of anti-thermal result from being hollow, but the weight can be further lighten for having a hollow structure. It should be noted that the hollow anti-thermal units in the rim body may be hollow glass balls or hollow ceramic balls. The hollow glass balls may be hollow soda lime borosilicate glass balls. An average particle diameter of the hollow anti-thermal units may range from 20 µm to 50 µm.

Accordingly, another embodiment may also use the hollow anti-thermal units to integrate the abrasion-resistant effects with the anti-thermal effects, such that the high temperature will not easily reach the location where the wheel rim bears forces. Meanwhile, since the rim body adopts the carbon fiber composite materials formed integrally, the hollow anti-thermal units are spread in the rim body or the two surfaces corresponding to the two braking elements to further lighten the weight of elements.

According to a second aspect of the invention, a method of manufacturing a wheel rim is proposed, and the method is adapted to manufacturing the aforementioned wheel rim and includes the following steps. A plurality of hollow anti-thermal units are added to a macromolecule material and the hollow anti-thermal units are sufficiently mixed to spread in the macromolecule material. A carbon fiber material is mixed to become a carbon fiber composite material. The carbon fiber composite material are shaped and hardened on the wheel rim corresponding to the braking elements.

By the method, the hollow anti-thermal units are spread in two surfaces corresponding to the two braking elements of the rim body. The hollow anti-thermal units are used to integrate the abrasion-resistant effects with the anti-thermal effects, such that the high temperature will not easily reach the location where the wheel rim bears forces. Meanwhile, the weight of elements may be further lightened. The carbon fiber composite materials may include fiber materials and macromolecule materials.

### BRIEF DESCRIPTION OF THE DRAWINGS

The present disclosure can be more fully understood by reading the following detailed description of the embodiment, with reference made to the accompanying drawings as follows:
Fig. 1 illustrates a 3-D sectional view of an embodiment of a wheel rim;
Fig. 2 illustrates a plane sectional view of the wheel rim in Fig. 1;
Fig. 3 illustrates a 3-D sectional view of another embodiment of the wheel rim;
Fig. 4 illustrates a plane sectional view of the wheel rim in Fig. 3; and
Fig. 5 illustrates a flow chart of the method of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

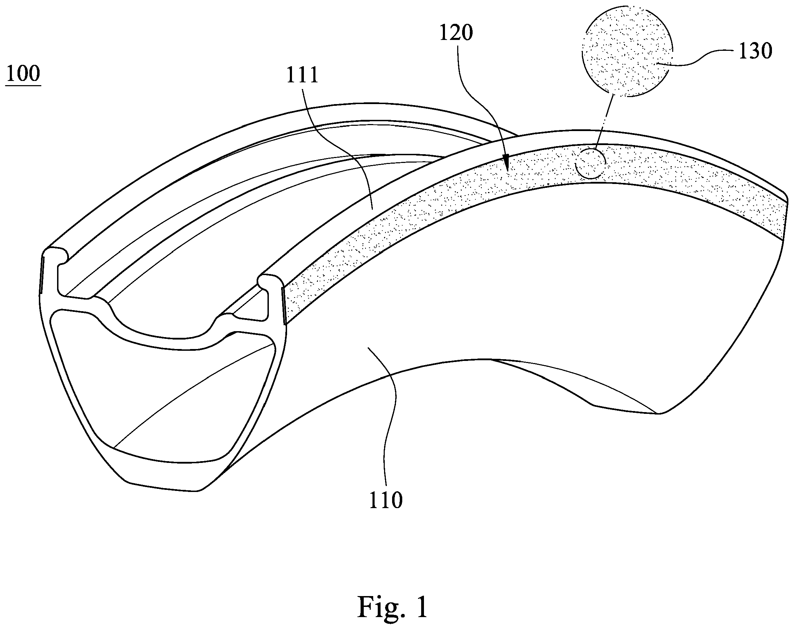

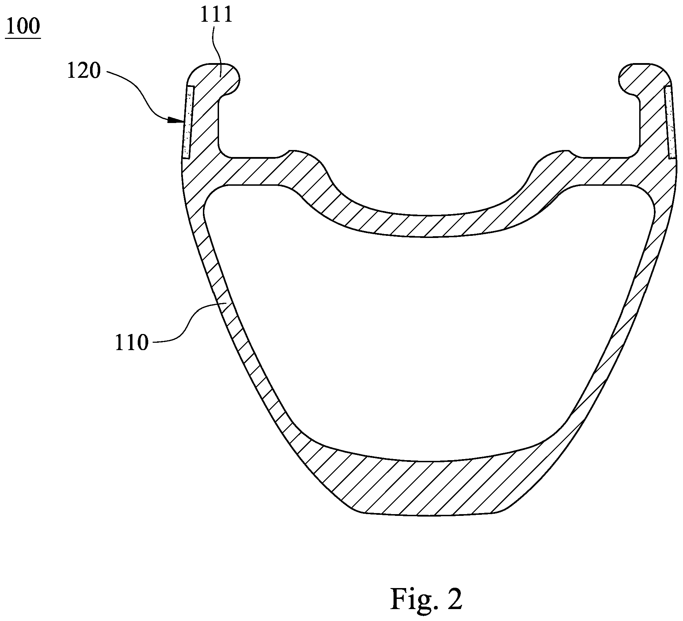

Please refer to both of Fig. 1 and Fig. 2. Fig. 1 illustrates a 3-D sectional view of an embodiment of a wheel rim; Fig. 2 illustrates a plane sectional view of the wheel rim in Fig. 1. According to a structure embodiment of the present disclosure, a wheel rim 100 is proposed to be used on bicycles, where the wheel rim 100 is disposed between two corresponding braking elements (not shown). The wheel rim 100 includes a rim body 110, two firm tracks 120 and a plurality of hollow anti-thermal units 130.

The rim body 110 adopts a carbon fiber composite material mainly including a fiber material with high rigidity and a macromolecule material that enhances the ability of the materials being abrasion-resistant and anti-thermal. The rim body 110 further includes a tire-fixing part 111.

Two firm tracks 120 are opposite to each other and exposedly disposed on two sides of the rim body 110. The two firm tracks 120 respectively correspond to the two braking elements. The tire-fixing part 111 is located closely to the two firm tracks 120.

The hollow anti-thermal units 130 are hollow soda lime borosilicate glass balls, and the hollow anti-thermal units 130 are spread in each of the firm tracks 120. An average particle diameter of the hollow anti-thermal units 130 ranges from 20 µm to 50 µm. By the aforementioned embodiments, the hollow anti-thermal units 130 are used to be mixed and spread in the firm tracks, such that not only the hollow structure of the hollow anti-thermal units 130 can be used, but also the weight of the rim body 110 can be effectively reduced. Moreover, the transmission rate of the thermal energy in the elements can be reduced through the hollow structure feature of the hollow anti-thermal units 130, and hence the goal of preventing the material of the rim body 110 from being damaged by continuous high temperature can be achieved, such that the high temperature will not reach the rim body 110. As a result, the present disclosure can integrate the abrasion-resistant effects with the anti-thermal effects of the hollow anti-thermal units 130.

It should be noted that the hollow anti-thermal units 130 may be hollow ceramic balls.

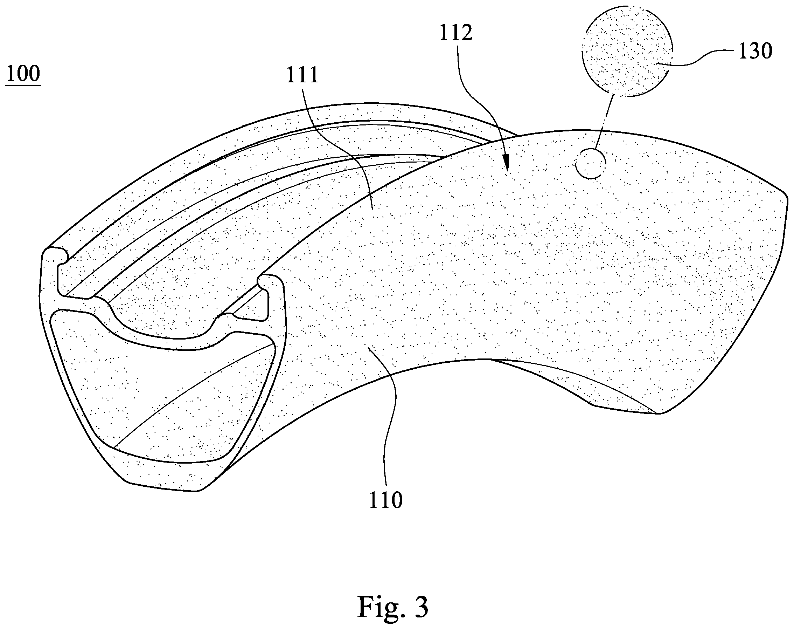

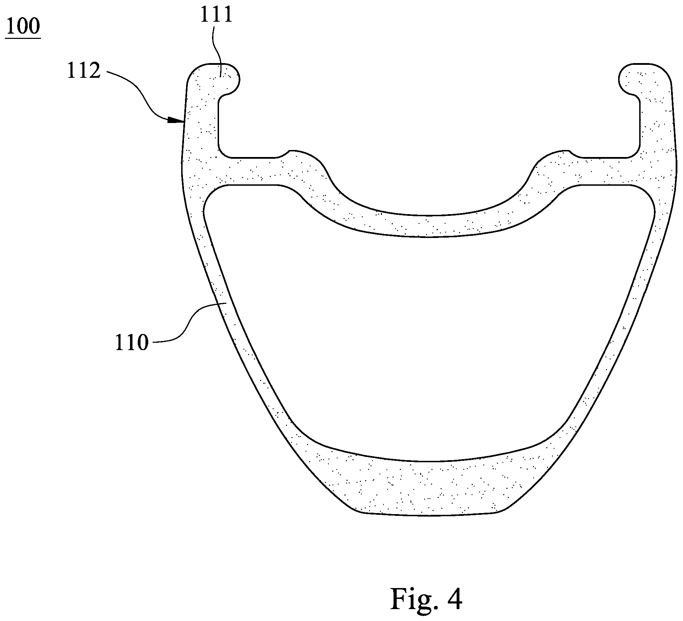

Please further refer to Fig. 3 and Fig. 4. Fig. 3 illustrates a 3-D sectional view of another embodiment of the wheel rim; Fig. 4 illustrates a plane sectional view of the wheel rim in Fig. 3. According to another structure embodiment of the present disclosure, a wheel rim 100 is proposed to be used on bicycles, where the wheel rim 100 is disposed between two corresponding braking elements (not shown). The wheel rim 100 includes a rim body 110 and a plurality of hollow anti-thermal units 130.

The rim body 110 adopting a carbon fiber composite material is formed integrally, and the rim body 110 mainly includes a fiber material with high rigidity and a macromolecule material that enhances the ability of the materials being abrasion-resistant and anti-thermal. The rim body 110 of the bicycles further includes a tire-fixing part 111.

The hollow anti-thermal units 130 are spread in two surfaces 112 corresponding to the two braking elements of the rim body 110, where the surfaces 112 may be all of the surfaces of the rim body 110. By the another embodiment, not only the effects of preventing the high-temperature from reaching the rim body 110 can be achieved, but also the overall weight of the rim body 110 can be lightened by better using the hollow structures of the hollow anti-thermal units 130.

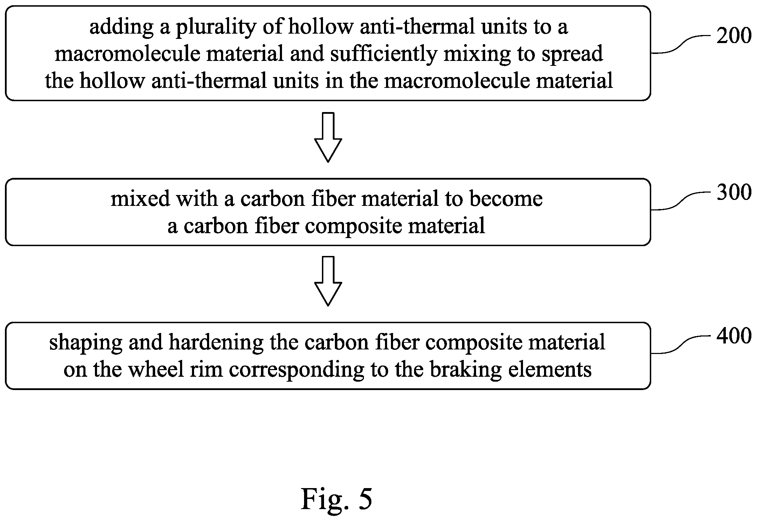

Please refer to Fig. 5, which illustrates a flow chart of the method of the present disclosure. The method in Fig. 5 is the method of manufacturing the wheel rim 100 in Fig. 1 or Fig. 3 and includes the steps as follow. In step 200, a plurality of hollow anti-thermal units are added to a macromolecule material, and the hollow anti-thermal units are sufficiently mixed to spread in the macromolecule material. In step 300, the carbon fiber material is mixed the macromolecule material with the hollow anti-thermal units to become a carbon fiber composite material. In step 400, the carbon fiber composite material is shaped and hardened on the wheel rim corresponding to the braking elements. The materials mixed with the carbon fiber composite materials of step 300 mainly include fiber materials and macromolecule materials.

It can be understood based on the aforementioned embodiments that the wheel rim and the method of manufacturing the wheel rim proposed in the present disclosure may integrate the effect of lightening the wheel rim with the effect of reducing thermal transmission rate to achieve the goals of extending the lifetime of the rim body and lightening the weight.

## Claims

1. A wheel rim (100) disposed in use between two corresponding braking elements, comprising:
a rim body (110) adopting a carbon fiber composite material; **characterised by** a plurality of hollow anti-thermal units (130) spread in two surfaces of the rim body (110) corresponding to the two braking elements.

2. The wheel rim (100) of claim 1, further comprising:
two firm tracks (120) opposite to each other and exposedly mounted on two sides of the rim body (110), wherein the two firm tracks (120) respectively correspond to the two braking elements, and the two surfaces of the rim body (110) are surfaces of the two firm tracks (120).

3. The wheel rim (100) of claim 1, wherein the hollow anti-thermal units (130) are hollow glass balls or hollow ceramic balls.

4. The wheel rim (100) of claim 3, wherein an average particle diameter of the hollow anti-thermal units (130) ranges from 20 µm to 50 µm.

5. The wheel rim (100) of claim 1, wherein the hollow anti-thermal units (130) are hollow soda lime borosilicate glass balls.

6. The wheel rim (100) of claim 1, wherein the rim body (110) is formed integrally.

7. A method of manufacturing the wheel rim (100) of claim 1, comprising:
adding the plurality of hollow anti-thermal units (130) to a macromolecule material and sufficiently mixing to spread the hollow anti-thermal units (130) in the macromolecule material;
mixing with a carbon fiber material to become a carbon fiber composite material; and
shaping and hardening the carbon fiber composite material on the wheel rim (100) corresponding to the braking elements.

8. The method of manufacturing the wheel rim (100) of claim 7, wherein the hollow anti-thermal units (130) are hollow soda lime borosilicate glass balls, and an average particle diameter of the hollow anti-thermal units (130) ranges from 20 µm to 50 µm.

## Patentansprüche

1. Radfelge (100), die beim Gebrauch zwischen zwei entsprechenden Bremselementen angebracht ist, umfassend:
einen Felgenkörper (110), der ein Kohlenstofffaserverbundmaterial einsetzt,
**dadurch gekennzeichnet, dass**
eine Vielzahl an hohlen anti-thermalen Einheiten (130) in zwei Oberflächen des Felgenkörpers (110) verteilt sind, die zu den Bremselementen korrespondieren.

2. Radfelge (100) gemäß Anspruch 1, ferner umfassend:
zwei feste Bahnen (120), die einander entgegengesetzt sind und die an zwei Seiten des Felgenkörpers (110) exponiert angebracht sind, wobei die zwei festen Bahnen (120) jeweils den zwei Bremselementen entsprechen und die zwei Oberflächen des Felgenkörpers (110) Oberflächen der zwei festen Bahnen (120) sind

3. Radfelge (100) gemäß Anspruch 1, bei welcher die hohlen anti-thermalen Einheiten (130) hohle Glaskugeln oder hohle Keramikkugeln sind.

4. Radfelge (100) gemäß Anspruch 3, bei welcher ein durchschnittlicher Partikeldurchmesser der hohlen anti-thermalen Einheiten (130) in einem Bereich von 20 µm bis 50 µm liegt.

5. Radfelge (100) gemäß Anspruch 1, bei welcher die hohlen anti-thermalen Einheiten (130) hohle Natronkalkborsilikatglaskugeln sind.

6. Radfelge (100) gemäß Anspruch 1, bei welcher der Felgenkörper (110) einstückig ausgebildet ist.

7. Verfahren zur Herstellung der Radfelge (100) gemäß Anspruch 1, umfassend:
Hinzufügen der Vielzahl an hohlen anti-thermalen Einheiten (130) zu einem makromolekularen Material und ausreichendes Mischen, um die hohlen anti-thermalen Einheiten (130) in dem makromolekularen Material zu verteilen, Mischen mit einem Kohlenstofffasermaterial, um ein Kohlenstofffaserverbundmaterial zu erhalten, und
Formen und Härten des Kohlenstofffaserverbundmaterials an der Radfelge (100), korrespondierend zu den Bremselementen.

8. Verfahren zur Herstellung der Radfelge (100) gemäß Anspruch 7, bei welcher die hohlen anti-thermalen Einheiten (130) hohle Natronkalkborsilikatglaskugeln sind und ein durchschnittlicher Partikeldurchmesser der hohlen anti-thermalen Einheiten (130) in einem Bereich von 20 µm bis 50 µm liegt.

## Revendications

1. Jante de roue (100) disposée, en utilisation, entre deux éléments de freinage correspondants, comprenant:
un corps de jante (110) adoptant un matériau composite en fibres de carbone,
**caractérisée par**
une pluralité d'unités antithermiques creuses (130) réparties dans deux surfaces du corps de jante (110) correspondant aux deux éléments de freinage.

2. Jante de roue (100) selon la revendication 1, comprenant en outre:
deux rails solides (120) à l'opposé l'un de l'autre et montés, de manière à être exposés, sur deux côtés du corps de jante (110), dans laquelle les deux rails solides (120) correspondent respectivement aux deux éléments de freinage, et les deux surfaces du corps de jante (110) sont des surfaces des deux rails solides (120).

3. Jante de roue (100) selon la revendication 1, dans laquelle les unités antithermiques creuses (130) sont des billes de verre creuses ou des billes de céramique creuses.

4. Jante de roue (100) selon la revendication 3, dans laquelle un diamètre moyen de particules des unités antithermiques creuses (130) est dans une plage de 20 µm à 50 µm.

5. Jante de roue (100) selon la revendication 1, dans laquelle les unités antithermique creuses (130) sont des billes de verre de borosilicate de chaux sodée creuses.

6. Jante de roue (100) selon la revendication 1, dans laquelle le corps de jante (110) est formé intégralement

7. Procédé de fabrication de la jante de roue (100) selon la revendication 1, comprenant:
l'ajout de la pluralité d'unités antithermiques creuses (130) à un matériau macromoléculaire et le mélange suffisant pour répartir les unités antithermiques creuses (130) dans le matériau macromoléculaire;
le mélange avec un matériau de fibres de carbone pour obtenir un matériau composite de fibres de carbone; et
le façonnage et le durcissement du matériau composite de fibres de carbone sur la jante de roue (100) correspondant aux éléments de freinage.

8. Procédé de fabrication de la jante de roue (100) selon la revendication 7, dans lequel les unités antithermiques creuses (130) sont des billes de verre de borosilicate de chaux sodée creuses, et un diamètre moyen de particules des unités antithermiques creuses (130) est dans une plage de 20 µm à 50 µm.
